Europäisches Patentamt

European Patent Office

Office européen des brevets

(11) Veröffentlichungsnummer : **0 553 125 B1**

(12) **EUROPÄISCHE PATENTSCHRIFT**

(45) Veröffentlichungstag der Patentschrift :
**31.08.94 Patentblatt 94/35**

(51) Int. Cl.⁵ : **H01M 8/06, F02C 3/28,**
**F02C 3/20, F01K 23/06**

(21) Anmeldenummer : **91917218.9**

(22) Anmeldetag : **30.09.91**

(86) Internationale Anmeldenummer :
**PCT/DE91/00781**

(87) Internationale Veröffentlichungsnummer :
**WO 92/07392 30.04.92 Gazette 92/10**

(54) **VERFAHREN UND ANLAGE ZUR KOMBINIERTEN ERZEUGUNG ELEKTRISCHER UND MECHANISCHER ENERGIE.**

(30) Priorität : **15.10.90 DE 4032993**

(43) Veröffentlichungstag der Anmeldung :
**04.08.93 Patentblatt 93/31**

(45) Bekanntmachung des Hinweises auf die
Patenterteilung :
**31.08.94 Patentblatt 94/35**

(84) Benannte Vertragsstaaten :
**AT BE CH DE DK ES FR GB GR IT LI LU NL SE**

(56) Entgegenhaltungen :
**EP-A- 0 170 277**
**EP-A- 0 246 649**
**EP-A- 0 267 137**
**DE-B- 1 178 512**
**GB-A- 971 776**
**US-A- 3 167 913**
**Patent Abstracts of Japan, vol. 11, No. 154**
**(E-508) 19 Mai 1987, & JP A 61290665 (Hitachi**
**Ltd) 20 Dezember 1986**
**Patent Abstracts of Japan, vol. 11,No. 254**
**(E-533)(2701) 18 August 1987, & JP A 62064067**
**(Babcock Hitachi K.K.) 20 Marz 1987, siehe**
**Zusammenfassung**
**Patent Abstracts of Japan, vol. 11, No. 271**
**(E-536)(2718) 3 September 1987, & JP A**
**62071172 (Chiyoda Chem Eng & Const. Co.**
**Ltd) 1 April 1987, siehe Zusammenfassung**
**Patent Abstracts of Japan, vol. 12, No. 106**
**(E-596)(2953) 6 April 1988, & JP A 62234871**
**(Hitachi Ltd) 15 Oktober 1987, siehe Zusam-**
**menfassung**

(56) Entgegenhaltungen :
**Extended Abstracts, Bd. 87, Nr. 2, Oktober**
**1987, Honolulu, Hawaii; M. Krumpelt et al.:**
**"Systems analysis for high-temperature fuel**
**cells", Seiten 261-262, siehe Abbildung 5**
**Patent Abstracts of Japan, vol. 9, No. 180**
**(C-293) 25 Juli 1985, & JP A 60051604 (Ishika-**
**wajima Harima Jukogyo K.K.) 23 Marz 1985,**
**siehe zusammenfassung**

(73) Patentinhaber : **MANNESMANN**
**Aktiengesellschaft**
**Postfach 10 36 41**
**D-40027 Düsseldorf (DE)**
Patentinhaber : **K.T.I. Group B.V.**
**Bredewater 26,**
**Box 86**
**NL-2700 AB Zoetermeer (NL)**
Patentinhaber : **A.S.A. B.V.**
**177, Havendijk**
**NL-3114 EB Schiedam (NL)**

(72) Erfinder : **ANKERSMIT, Jan, Hendrik**
**Havendijk 177**
**NL-3114 EB Schiedam (NL)**
Erfinder : **HENDRIKS, Rudolf**
**Julianastraat 10**
**NL-6881 VN Velp (NL)**
Erfinder : **BLOMEN, Leo, Jozef, Maria,**
**Johannes**
**De Savorin Lohmanplants 38**
**NL-2253 VP Voorschoten (NL)**

(74) Vertreter : **Meissner, Peter E., Dipl.-Ing. et al**
**Meissner & Meissner,**
**Patentanwaltsbüro,**
**Postfach 33 01 30**
**D-14171 Berlin (DE)**

## Beschreibung

Die Erfindung betrifft ein Verfahren zur kombinierten Erzeugung elektrischer und mechanischer Energie entsprechend dem Oberbegriff des Patentanspruchs 1 sowie eine Vorrichtung zu dessen Durchführung.

In den meisten thermischen Kraftwerken wird zur Erzeugung elektrischer Energie zunächst durch Verbrennung fossiler Brennstoffe in Kesselanlagen überhitzter Dampf erzeugt, der in Dampfturbinen entspannt und dabei in mechanische Energie umgesetzt wird. Die Dampfturbinen sind mit elektrischen Generatoren gekoppelt, so daß diese mechanische Energie in elektrische umgesetzt wird. Letzteres geschieht mit einem Wirkungsgrad von deutlich über 90 %. Dagegen nimmt sich der Wirkungsgrad der Umsetzung der im eingesetzten Brennstoff chemisch gebundenen Energie in mechanische Energie recht bescheiden aus, da der Turbinenwirkungsgrad selbst bei Großturbinen höchstens etwa 37 % beträgt und auch im Heizkessel noch Verluste in Kauf genommen werden müssen.

In vielen Fallen konnte daher bisher etwa nur 35 % der bei der Verbrennung frei werdenden Warme effektiv für die Elektrizitätserzeugung genutzt werden, während etwa 65 % als Abwärme verloren gingen oder nur zu reinen Wärmezwecken benutzt werden konnten.

Eine erhebliche Steigerung des mechanischen oder elektrischen Wirkungsgrades hat man in jüngerer Zeit dadurch erzielen können, daß man zur Umsetzung der Wärmeenergie in mechanische Energie eine Kombination von Gasturbinen und Dampfturbinen einsetzt, wobei die heißen Verbrennungsgase zunächst auf Gasturbinen entspannt werden und für die Erzeugung des Dampfes für die Dampfturbinen die Wärme des Abgases dieser Gasturbinen benutzt wird. Zusätzliche Verbesserungsmöglichkeiten bestehen darin, daß man den aus einer Dampfturbine abströmenden entspannten Dampf jeweils in die Brennkammer der vorgeschalteten Gasturbine zurückleitet und so einen größeren Volumenstrom zum Antrieb der Gasturbine erzeugt. Diese Maßnahmen haben es ermöglicht, den Wirkungsgrad der Umwandlung von thermischer Energie in mechanische Energie bei größeren Anlagen (über 50 MW) in eine Größenordnung von etwa 48 bis 50 % zu bringen.

Aus der EP 0 318 122 A2 ist ein Verfahren und eine Anlage zur Erzeugung mechanischer Energie aus gasformigen Brennstoffen bekannt, in der die z.B. zur Stromerzeugung nutzbare mechanische Energie nicht zu einem Teil durch eine Dampfturbine sondern allein durch eine Gasturbine abgegeben wird. Diese Gasturbine, die insbesondere für einen Leistungsbereich von 50 - 3000 KW vorgesehen ist, erreicht dabei bezogen auf die eingesetzte thermische Energie (unterer Heizwert) einen Wirkungsgrad von etwa 42 %. Hierzu ist vorgesehen, daß zunächst Verbrennungsluft in einem Kompressor verdichtet wird. Die verdichtete Verbrennungsluft wird dann in einem Abgaswärmetauscher aufgeheizt, über eine erste Gasturbine, die nur den Kompressor antreibt, teilweise entspannt und anschließend einer Brennkammer zugeführt, in der Brennstoff mit dieser Verbrennungsluft verbrannt wird.

Das bei der Verbrennung entstehende heiße Abgas treibt eine zweite Gasturbine an, die die eigentliche nutzbare mechanische Energie liefert. Das von der zweiten Gasturbine abströmende noch heiße Abgas wird dazu benutzt, den Abgaswärmetauscher für die Aufheizung der komprimierten Verbrennungsluft zu betreiben.

In der nicht vorveröffentlichten DE-P 40 03 210.8 wurde von den Anmeldern bereits ein Verfahren zur Erzeugung mechanischer Energie vorgeschlagen, die durch einen elektrischen Generator in elektrische Energie umsetzbar ist. Dieses Verfahren sieht vor, daß ein Ausgangsbrennstoff auf der Basis von Kohlenwasserstoffverbindungen zunächst in einer Dampfreformierung in ein vom energetischen Standpunkt aus höherwertiges $H_2$-reiches Gas umgesetzt wird, bevor dieses $H_2$-reiche Gas in einer oder mehreren Brennkammern verbrannt wird. Die Verbrennung erfolgt mit Hilfe eines komprimierten $O_2$-haltigen Gases (z.B. verdichtete Luft). Das erzeugte heiße Verbrennungsgas wird auf einer Gasturbine, die die nach außen abgebbare mechanische Energie erzeugt, entspannt, kühlt dabei entsprechend ab und wird anschließend zur indirekten Beheizung des Dampfreformers eingesetzt. Das im Dampfreformer weiter abgekühlte Verbrennungsgas wird danach noch zur Erwärmung der verdichteten Verbrennungsluft in einem weiteren indirekten Wärmeaustausch genutzt. Hierdurch erhält die verdichtete Verbrennungsluft so viel Energie, daß sie auf einer Gasturbine vor ihrer Nutzung für die Verbrennung teilweise entspannt werden kann und so die benötigte Antriebsenergie für die Drucklufterzeugung liefert. In einer anderen Variante dieses Verfahrens wird die verdichtete und durch den indirekten Wärmeaustausch erwärmte Verbrennungsluft zunächst in eine Brennkammer geführt und dort mit einem Teil des $H_2$-reichen Gases verbrannt, so daß ein noch heißeres Gas zur Entspannung auf der Gasturbine zur Verfügung steht.

Dieses Verfahren ermöglicht es, den Wirkungsgrad bei der Umsetzung der in einem herkömmlichen Brennstoff (z.B. Erdgas oder Biogas) enthaltenen Energie (unterer Heizwert $H_u$) in mechanische Energie mit vertretbarem Aufwand bei Kleinanlagen (bis ca. 3 MW Leistung) auf mindestens 50 % und bei größeren Anlagen auf mindestens 55 % zu steigern.

Im Regelfall ist bei derartigen Verfahren vorgesehen, die erzeugte mechanische Energie letztlich in elektrischen Strom umzusetzen. In dieser Form ist die Energie nämlich am einfachsten an beliebige Orte mit Energiebedarf transportierbar und kann auf vergleichsweise einfache Weise mit hohem Wirkungsgrad wieder in andere Energieformen (z.B. mechanische oder thermische) zurückverwandelt werden. Auf der anderen Seite ist der Umstand zu sehen, daß in zunehmendem Maße gefordert wird, die Entstehung von $CO_2$ und sonstigen Schadstoffen (insbesondere $NO_x$, $SO_x$) bei der Umsetzung von Brennstoffen in elektrischen Strom oder mechanische Energie deutlich zu vermindern. In bezug auf die Komponente $CO_2$ kann diese Forderung, wenn man den Aufwand für die Abtrennung von $CO_2$ aus den entstehenden Abgasen nicht treiben möchte, nur dann realisiert werden, wenn die Umsetzung der im eingesetzten Brennstoff chemisch gebundenen Energie in deutlich effektiverer Weise als bisher vor sich geht. Es besteht also nicht nur aus rein wirtschaftlichen sondern insbesondere auch aus Gründen des Umweltschutzes das Bedürfnis, den Wirkungsgrad der Energieumsetzung weiter zu erhöhen.

In der gattungsbildenden EP 0 246 649 A1 ist ein System zur Erzeugung elektrischer Energie beschrieben, bei dem ein Brennstoff auf Kohlenwasserstoffbasis in einem abgasbeheizten Reformer in ein $H_2$-reiches Gas umgesetzt wird, wobei die Konversionsrate mit nur 20 - 50 % deutlich unter den sonst üblichen Werten von 80 - 90 % bleibt, so daß das $H_2$-reiche Gas noch große Mengen an nicht umgewandeltem Brennstoff enthält. Das erzeugte $H_2$-reiche Gas wird anschließend dem Anodenraum einer Brennstoffzelle zugeführt, die als Schmelzkarbonat-Brennstoffzelle ausgebildet ist und eine hohe Betriebstemperatur im Bereich von etwa 700°C hat. Das die Hochtemperatur- Brennstoffzelle verlassende Anodenabgas wird in zwei Teilströme aufgeteilt. Ein erster Teilstrom, der als Hauptstrom anzusehen ist, wird mit komprimierter Luft verbrannt und zum Antrieb einer mit einem elektrischen Generator gekoppelten Gasturbine genutzt. Das noch heiße Abgas dieser Gasturbine wird anschließend zur Erzeugung von Wasserdampf eingesetzt, der seinerseits zum Betrieb einer Dampfturbine verwendet wird, die ebenfalls mit dem elektrischen Generator gekoppelt ist. Ein zweiter Teilstrom des Anodenabgases wird in einem gesonderten Brenner mit komprimierter Luft verbrannt, wobei das erzeugte Verbrennungsgas zwecks Rezyklierung von $CO_2$ anschließend als Kathodengas der Brennstoffzelle zugeführt wird. Das Kathodenabgas, das aus der Brennstoffzelle Wärme abführt und somit gleichzeitig als Kühlmittel fungiert, besitzt eine der Betriebstemperatur der Brennstoffzelle entsprechende hohe Temperatur und wird zur Beheizung des Reformers verwendet und anschließend noch auf einer Entspannungsturbine entspannt. Diese Entspannungsturbine treibt lediglich den Kompressor an für die Erzeugung der komprimierten Luft, die dem Brenner für die Verbrennung des zweiten Teilstroms des Anodenabgases zugeführt werden soll. Für die Kompression der Verbrennungsluft für den Hauptstrom des Anodenabgases wird ein separater Verdichter eingesetzt, der unmittelbar mit der Gasturbine gekoppelt ist, die den Generator antreibt.

Aufgabe der Erfindung ist es daher, ein Verfahren und eine Anlage zur Durchführung dieses Verfahrens anzugeben, das es gestattet, die Umsetzung der in einem Brennstoff chemisch gebundenen Energie (unterer Heizwert $H_u$) in elektrische und mechanische Energie mit einem Wirkungsgrad von mindestens 60 %, möglichst sogar über 65 %, durchführen zu können.

Gelöst wird diese Aufgabe durch ein Verfahren mit den Merkmalen des Patentanspruchs 1. Dieses Verfahren ist erfindungsgemäß durch die kennzeichnenden Merkmale der Unteransprüche 2 bis 21 in vorteilhafter Weise ausgestaltbar. Eine Anlage zur Durchführung dieses Verfahrens weist die Merkmale des Patentanspruchs 22 auf und läßt sich durch die kennzeichnenden Merkmale der Unteransprüche 23 bis 44 in vorteilhafter Weise ausgestalten.

Der Erfindung liegt die Idee zugrunde, einen herkömmlichen Brennstoff durch eine endotherme Reaktion (z.B. Dampfreformierung) zunächst unter Nutzung von Abwärme in einen höherwertigen $H_2$-haltigen Brennstoff umzusetzen und dann wenigstens teilweise als Brennstoff in einer Brennstoffzelle zur direkten Erzeugung von elektrischer Energie einzusetzen. Dabei wird ein Großteil des $H_2$-Gehaltes durch Oxidation verbraucht. Der verbleibende Restgehalt an $H_2$ und die sonstigen brennbaren Bestandteile (CO und nicht umgewandelte Kohlenwasserstoffverbindungen) des ursprünglich $H_2$-reichen Gases werden dann einer Verbrennung zugeführt. Das zur Verbrennung kommende Gas kann aus einem Gemisch unterschiedlicher im Verfahren gebildeter Gasstrome bestehen und zusätzlich durch Anteile des primär eingesetzten Brennstoffs angereichert werden. Die dabei entstehenden heißen Verbrennungsgase werden auf einem Gasturbinensystem entspannt und zur Erzeugung mechanischer oder (bei Ankopplung an einen elektrischen Generator) zusätzlicher elektrischer Energie genutzt. Wesentlich dabei ist, daß die im Verfahren freigesetzte Wärmeenergie durch systematische Nutzung der Abwärmeenergie auf möglichst nutzbringendem Niveau weitgehend in die letztlich angestrebten Energieformen umgesetzt wird. Dies geschieht insbesondere dadurch, daß das auf dem Gasturbinensystem entspannte Verbrennungsgas oder ein Teilstrom dieses Verbrennungsgases zunächst zur Beheizung des Dampfreformierprozesses genutzt und danach noch zur Erwärmung des für die Erzeugung des Verbrennungsgases benötigten komprimierten $O_2$-haltigen Gases eingesetzt wird.

Vor der Ableitung der weitgehend abgekühlten Verbrennungsgase in die Umwelt können diese über die Erzeugung elektrischer und mechanischer Energie hinaus im Sinne einer Kraft/Wärme-Kopplung auch noch für ausgesprochene Heizzwecke (z.B. Beheizung von Gebäuden, Treibhäusern usw.) eingesetzt werden und dadurch die Energienutzung weiter erhöhen. Bezogen auf den unteren Heizwert des eingesetzten Brennstoffs kann der elektrische Wirkungsgrad des erfindungsgemäßen Verfahrens je nach Ausführungsform auf Werte von 60 bis 80 % (typische Werte 65-75 %) gesteigert werden. Die Erfindung ist ausführbar mit einer oder mehreren Gasturbinen, mit einer oder mehreren Dampfreformieranlagen, mit einer oder mehreren Brennstoffzellen und mit einer oder mehreren Brennkammern zur Erzeugung des benötigten Verbrennungsgases. Zusätzlich können auch ein oder mehrere Dampferzeuger und ein oder mehrere Dampfturbinen vorgesehen sein. Gleiche Aggregate können dabei schaltungstechnisch in Serie oder parallel zueinander angeordnet sein. Unter dem Begriff Brennstoffzelle wird in diesem Zusammenhang jede Kombination von zusammengeschalteten Brennstoffzellenelementen verstanden.

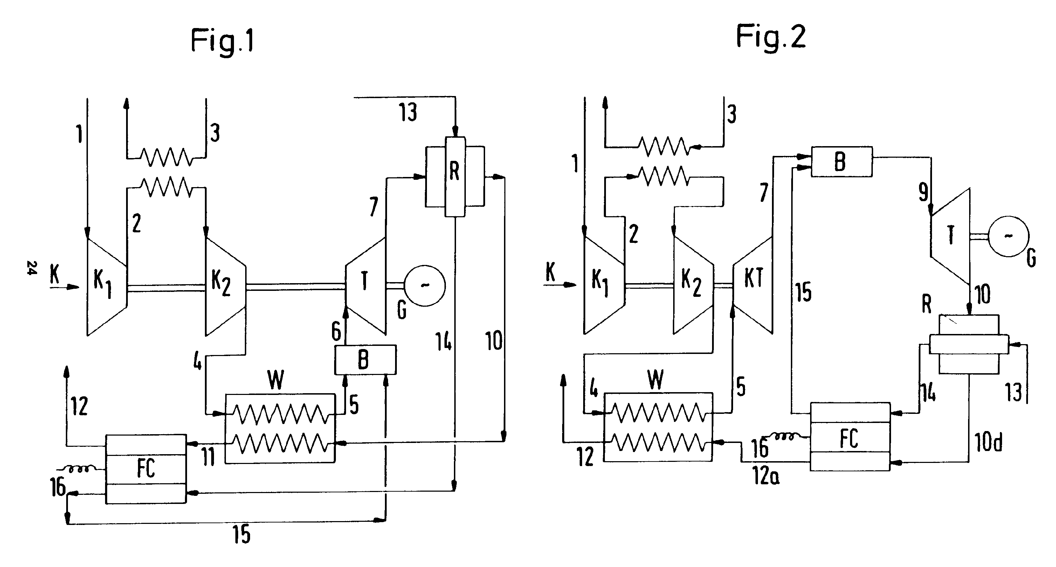

Die erfindungsgemäße Anlage weist die Merkmale des Anspruches 21 auf. Im einzelnen wird die Erfindung anhand der in der Figuren 1 bis 5 dargestellten Anlagenformen näher erläutert.

Die Anlage in Figur 1 weist ein aus zwei Kompressorstufen K1 und K2 bestehendes Kompressorsystem K auf, in dem ein $O_2$-haltiges Gas (vorzugsweise Luft) auf einen höheren Druck verdichtet wird. Dieses Gas wird durch die Rohrleitung 1 angesaugt und gelangt über die Rohrleitung 2 von der ersten Kompressorstufe K1 in die zweite Kompressorstufe K2.

In die Rohrleitung 2 ist ein Wärmeaustauscher eingeschaltet, der eine Zwischenkühlung des teilverdichteten $O_2$-haltigen Gases vornimmt und die entzogene Wärme über einen Kühlkreislauf 3 nach außen abgibt. Die abgegebene Wärme kann bei Bedarf zu Heizzwecken außerhalb des Verfahrens verwendet werden.

Grundsätzlich ist es aber auch möglich, diese Wärme z.B. zur Vorwärmung von Wasser für die Erzeugung von Prozeßdampf im Verfahren selbst zu nutzen. Es versteht sich von selbst, daß das Kompressorsystem K auch einstufig oder in mehr als zwei Stufen ausgeführt sein kann.

Das komprimierte $O_2$-haltige Gas verläßt die letzte Kompressorstufe K2 über die Rohrleitung 4 und gelangt in einen indirekt beheizten Wärmeaustauscher W. Nach erfolgter Temperaturerhöhung wird das $O_2$-haltige Druckgas durch die Rohrleitung 5 in eine Brennkammer B geführt, in der es unter Bildung eines heißen komprimierten Verbrennungsgases mit einem $H_2$-haltigen und gegebenenfalls weitere brennbare Bestandteile enthaltenden Gas, welches über die Rohrleitung 15 zugeführt wird, exotherm reagiert. Zusätzlich zu dem $H_2$-haltigen Gas kann auch (zumindest zeitweilig) Primärbrennstoff (z.B. Erdgas) mit verbrannt werden. Das heiße Verbrennungsgas verläßt die Brennkammer B über eine Rohrleitung 6 und wird in einer Gasturbine T bis in die Nähe des Betriebsdrucks einer Brennstoffzelle FC entspannt. Die auf der Gasturbine T entstehende mechanische Energie wird zu einem Teil (z.B. über eine mechanische Ankopplung) für den Antrieb des Kompressorsystems K und zum anderen Teil zur Erzeugung von elektrischem Wechselstrom auf dem angekoppelten Generator G genutzt.

Das weitgehend entspannte, aber immer noch heiße Verbrennungsgas wird dann durch die Rohrleitung 7 als Heizmedium in einen indirekt beheizbaren Dampfreformer R geleitet. Der Dampfreformer R ist über die Rohrleitung 13 mit gasförmigen Kohlenwasserstoffen (Primärbrennstoff) und Dampf beschickbar, so daß in ihm ein $H_2$-reiches Gas entsteht, welches über die Rohrleitung 14 abgezogen wird. Das im Dampfreformer R weiter abgekühlte Verbrennungsgas besitzt immer noch einen beträchtlichen Wärmeinhalt. Es wird daher über die Rohrleitung 10 in den Wärmeaustauscher W geführt und bewirkt dort die bereits erwähnte Temperaturerhöhung des auf erhöhtem Druck befindlichen $O_2$-haltigen Gases. Danach kann das Verbrennungsgas abgeleitet werden.

Selbstverständlich kann dabei auch noch eine Nutzung der restlichen Wärmeenergie (z.B. für Prozeßwasservorwärmung oder Gebäudeheizung) erfolgen. Im vorliegenden Beispiel ist eine andere Nutzung vor der endgültigen Ableitung vorgesehen. Diese erfordert es, daß die Verbrennung in der Brennkammer B mit einem Überschuß an $O_2$ erfolgt. Das weitgehend abgekühlte Verbrennungsgas kann nämlich über die Rohrleitung 11 als Kathodengas der Brennstoffzelle FC zugeführt werden und deren $O_2$-Bedarf decken. Erst danach erfolgt die Ableitung durch die Rohrleitung 12.

Das von der Brennstoffzelle FC als Brennstoff benötigte $H_2$-reiche Gas wird durch die Rohrleitung 14 dem Anodenraum der Brennstoffzelle FC zugeführt. Durch den elektrochemischen Oxidationsprozeß in der Brennstoffzelle FC entsteht ein elektrischer Gleichstrom, der über die Leitung 16 nach außen abgegeben wird und bei Bedarf durch einen nicht dargestellten elektrischen Wechselrichter in Wechselstrom umgesetzt werden kann. Der Gleichstrom kann auch direkt dem Generator G zugeführt werden.

Da in der Brennstoffzelle FC stets nur ein Teil des $H_2$-Gehaltes des $H_2$-reichen Gases umgesetzt wird und noch weitere brennbare Gasbestandteile (z.B. CO und nicht umgewandelte Kohlenwasserstoffe) enthalten sein können, wird das Anodenabgas aus der Brennstoffzelle FC durch die Rohrleitung 15 als Brennstoff der Brennkammer B zugeführt. Zusätzlich kann der Brennkammer B auch noch ein Teil des Primärbrennstoffs unmittelbar, also ohne vorherige Umsetzung durch eine endotherme Reaktion zugeführt werden, um den Wärmebedarf zu decken. Dies ist insbesondere für das Anfahren des Prozesses sinnvoll und kann auch die Regelung vereinfachen. Um das Anodenabgas auf den in der Brennkammer B benötigten Druck zu bringen, kann in der Rohrleitung 15 ein nicht dargestellter Verdichter vorgesehen sein. Man könnte aber auch den Reformer R mit einem geeigneten Überdruck in dessen Reaktionsraum betreiben, so daß das Anodengas in der Rohrleitung 14 bereits mit ausreichendem Druck zur Verfügung steht. Dies erfordert jedoch an der Brennstoffzelle FC bauliche Vorkehrungen, die einen entsprechenden Druckunterschied zwischen Anoden- und Kathodenraum zulassen.

Der Betrieb der Brennstoffzelle FC erfolgt vorzugsweise so, daß der verbleibende Heizwert des Anodenabgases ausreicht, um die Beheizung des Dampfreformers R sicherzustellen und über den Bedarf an Antriebsenergie für das Kompressorsystem K hinaus mechanische Energie auf der Gasturbine T erzeugen zu können. Die abgasseitig am Ende des Verfahrens vorgenommene Anordnung des Brennstoffzellensystems FC ist insbesondere dann vorteilhaft, wenn der zum Einsatz kommende Brennstoffzellentyp mit relativ niedrigen Betriebstemperaturen arbeitet. Besonders geeignet sind Brennstoffzellen mit Elektrolyten auf der Basis Phosphorsäure (PAFC), Alkali (AFC) oder Festpolymer (SP(E)FC).

In den Figuren 2 bis 5 sind weitere Schematische Ausführungsformen der Anlage dargestellt, die im grundsätzlichen mit der Ausführung in Figur 1 übereinstimmen.

Funktionsgleiche Anlagenteile sind daher mit den gleichen Bezugszeichen versehen worden. Im folgenden braucht daher lediglich auf die Änderungen näher eingegangen zu werden.

In Figur 2 sind zwei Gasturbinen vorgesehen, von denen die erste Gasturbine KT ausschließlich für den Antrieb des Kompressorsystems K zuständig ist, während die zweite Gasturbine T die nach außen abgebbare mechanische Energie erzeugt. Grundsätzlich ist es auch bei einer solchen Aufgabenteilung unter den Gasturbinen KT und T im Gegensatz zur gezeigten Darstellung möglich, diese auf eine gemeinsame Welle zu setzen. Ein wesentlicher Unterschied zur Figur 1 besteht darin, daß die Brennkammer B erst hinter der Kompressorantriebsturbine KT angeordnet ist. Die Kompressorantriebsturbine KT wird daher allein durch die teilweise Entspannung der im Wärmeaustauscher W ausreichend hoch erhitzten verdichteten Verbrennungsluft angetrieben. Ein weiterer Unterschied ist darin zu sehen, daß die Brennstoffzelle FC nicht am abgasseitigen Ende des Verfahrens angeordnet ist. Das Verbrennungsgas wird nämlich über die Rohrleitung 10d unmittelbar nach Verlassen des Heizraumes des Dampfreformers R in den Kathodenraum des Brennstoffzellensystems FC geführt. Erst danach gelangt es durch eine Rohrleitung 12a zur indirekten Erwärmung der komprimierten Verbrennungsluft in den Wärmeaustauscher W. Diese Anordnung wird für Brennstoffzellentypen mit höherer Betriebstemperatur bevorzugt (z.B. bei Schmelzkarbonat- (MCFC) oder Festoxidbrennstoffzellen (SOFC)).

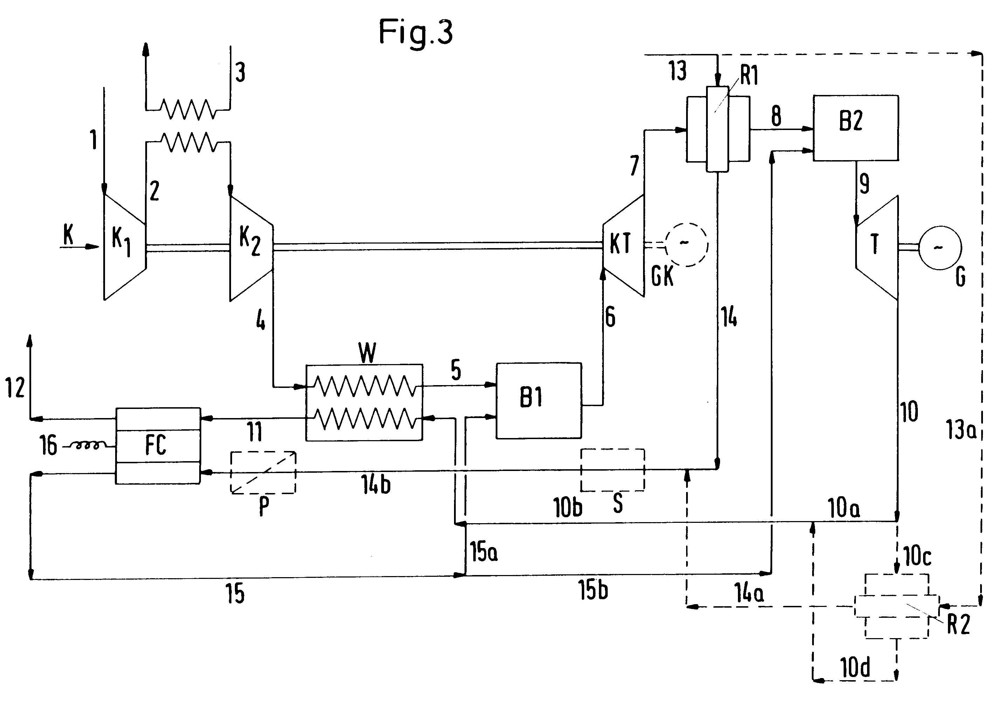

Die Verfahrensvariante in Figur 3 weist wie die in Figur 2 zwei getrennte Gasturbinen KT und T auf. Die Verbrennung der brennbaren Bestandteile des Anodenabgases des Brennstoffzellensystems FC findet jedoch in zwei Brennkammern B1 und B2 statt, die jeweils unmittelbar vor einer der beiden Gasturbinen KT und T angeordnet sind.

Da durch die Brennkammer B1 das auf der Kompressorantriebsturbine KT entspannbare Druckgas, das den Gesamtbedarf an $O_2$ für das Verfahren deckt, auf ein deutlich höheres Energieniveau angehoben werden kann, als dies praktisch möglich ist, wenn die Temperaturerhöhung allein durch den indirekten Wärmeaustausch im Wärmeaustauscher W erfolgt, kann auch diese Gasturbine KT zur Erzeugung mechanischer oder elektrischer Energie mit herangezogen werden. In der Darstellung ist daher ein zusätzlicher elektrischer Generator GK (gestrichelt dargestellt) an die Kompressorantriebsturbine KT angekoppelt.

Eine weitere mögliche Abwandlung des erfindungsgemäßen Verfahrens besteht in der Nutzung nicht nur mehrerer Gasturbinen und Brennkammern sondern auch mehrerer Dampfreformer. Diese können z.B. parallel geschaltet sein. Besonders vorteilhaft ist jedoch ihre Schaltung in Serie, wie dies in Figur 3 in gestrichelter Form dargestellt ist. Der erste Dampfreformer R1 ist unmittelbar hinter die Kompressorantriebsturbine KT geschaltet. Das aus dem Heizraum des Dampfreformers R1 ausströmende abgekühlte Verbrennungsgas, das noch einen erheblichen $O_2$-Gehalt aufweist, wird über die Rohrleitung 8 in die zweite Brennkammer B2 eingeleitet. In dieser Brennkammer B2 wird ein Teilstrom 15b des durch die Rohrleitung 15 abgezogenen Anodenabgases verbrannt, während der andere Teilstrom 15a in der ersten Brennkammer B1 verbrannt wird. Durch den Verbrennungsvorgang in der zweiten Brennkammer B2 entsteht ein heißer Strom von Verbrennungsgas, der gegenüber dem aus der ersten Brennkammer B1 ausströmenden Verbrennungsgas einen entsprechend größeren Mengenstrom darstellt.

Er wird durch die Rohrleitung 9 zur Gasturbine T geführt und bis oberhalb des vorgesehenen Betriebsdruck der Brennstoffzelle FC entspannt und durch die Rohrleitung 10 weitergeführt. Das Verbrennungsgas wird dann aber nicht durch das Rohrleitungsstück 10a der Leitung 10 geführt, sondern gelangt über die gestrichelt gezeichnete Rohrleitung 10c in den Heizraum des zweiten Dampfreformers R2 und nach Wärmeabgabe über die Rohrleitung 10d in das Rohrleitungsstück 10b der Leitung 10 zurück. Diese Leitung 10 führt wie in Figur 1 unmittelbar zum Wärmeaustauscher W. Die Versorgung des Dampfreformers R2 mit gasförmigen Kohlenwasserstoffen und Dampf erfolgt über die gestrichelt gezeichnete Rohrleitung 13a. Das im Dampfreformer R2 entstandene $H_2$-reiche Gas wird durch die Rohrleitung 14a zur Leitung 14 geführt und gelangt über das Rohrleitungsstück 14b zusammen mit dem im Dampfreformer R1 gebildeten $H_2$-reichen Gas zum Anodenraum des Brennstoffzellensystems FC, das selbstverständlich aus mehreren einzelnen Brennstoffzellen bestehen kann.

Die Darstellung in Figur 3 enthält noch zwei weitere Ausgestaltungen des Verfahrens, die in manchen Fällen vorteilhaft sein können. So kann beispielsweise das $H_2$-reiche Gas vor der Zuführung zur Brennstoffzelle FC zur Erhöhung des $H_2$-Gehaltes noch einer $CO/H_2$-Shiftreaktion in einem oder mehreren Reaktoren 5 unterzogen werden. Dies ist eine exotherme Reduktion, wobei durch die Umsetzung von CO mit Wasserdampf zu $CO_2$ und $H_2$ eine Erhöhung des $H_2$-Anteiles bewirkt wird. Darüber hinaus ist es sinnvoll, bei Brennstoffzellen, die gegen bestimmte Gaskomponenten (z.B. CO) empfindlich sind, eine entsprechende Gasreinigung P vorzusehen (z.B. mittels Membranen oder Druckwechseladsorption PSA). Eine solche Gasreinigung ist auch zur Steigerung des Brennstoffzellenwirkungsgrades vorteilhaft. Das abgetrennte Gas wird, was in Figur 3 nicht dargestellt ist, sofern es brennbare Komponenten enthält, vorzugsweise den Brennkammern B1 und B2 direkt zugeführt.

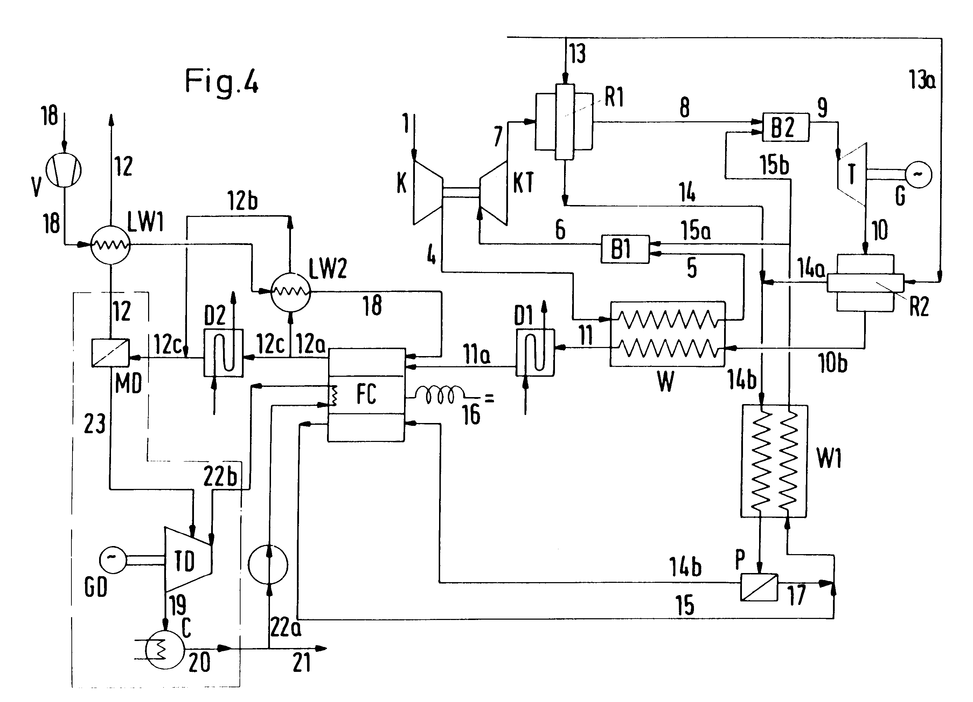

In Figur 4 ist die Erfindung in einer Ausführungsform schematisch dargestellt, die einen zusätzlichen Dampfturbinenprozeß zur Energieerzeugung mit einschließt und dadurch eine wesentliche Steigerung des Gesamtwirkungsgrades der Umsetzung der im eingesetzten Primärbrennstoff gebundenen Energie (unterer Heizwert) in mechanische und elektrische Energie bis in eine Größenordnung von 70-80 % ermöglicht. Im Unterschied zu Figur 3 erfolgt die Kompression der Verbrennungsluft im Kompressorsystem K ohne eine Zwischenkühlung, also nur einstufig. Um dennoch eine möglichst hohe Verdichtung bei der Kompression zu erreichen, ist es vorteilhaft, durch die Rohrleitung 1 bereits vorgekühlte Luft anzusaugen. Weiterhin ist in die Rohrleitung 14b, in der die in den Dampfreformern R1 und R2 erzeugten $H_2$-reichen Gasströme (Leitungen 14 und 14a) zusammengeführt sind, ein Wärmeaustauscher W1 eingeschaltet, der einen indirekten Wärmeaustausch der Wärme des $H_2$-reichen Gases zur Vorwärmung des durch die Rohrleitungen 15 (von der Brennstoffzelle FC) und 17 (von der Gasreinigung P) herangeführten brennbaren, $H_2$ enthaltenden Gases bewirkt, das durch die Rohrleitung 15a und 15b den Feuerräumen der Dampfreformer R1 und R2 zugeleitet wird.

Figur 4 unterscheidet sich von Figur 3 außerdem durch zwei Dampferzeuger $D_1$ und $D_2$, in denen durch indirekten Wärmeaustausch mit dem heißen Verbrennungsgas Frischdampf erzeugt wird, der mit Vorteil zur Erzeugung des Kohlenwasserstoff/Dampf-Gemisches (Reformereinsatzmaterial) verwendbar ist (zeichnerisch nicht dargestellt). Als weitere sinnvolle Verwendungsmöglichkeiten für den erzeugten Dampf sind die Turbinenschaufelkühlung und die Einleitung von Dampf in die Brennkammern B1 und B2 zur Vergrößerung des Massenstroms anzusehen.

Während der Dampferzeuger $D_1$ in die Rohrleitungen 11 und 11a eingeschaltet ist und das Verbrennungsgas etwa auf die Betriebstemperatur der Brennstoffzelle FC abkühlt, ist der Dampferzeuger $D_2$ in die Rohrleitung 12c eingebaut, durch die nur ein Teil des Kathodenabgases (Leitung 12a) geführt wird. Der andere Teil des Kathodenabgases gelangt in einem Nebenstrom durch die Rohrleitung 12b als Heizmedium in einen indirekt beheizten Luftvorwärmer $LW_2$ und wird danach wieder in die Rohrleitung 12c geführt. Bei dieser Ausführungsform der Erfindung reicht der $O_2$-Gehalt im Verbrennungsabgas in der Regel nämlich nicht mehr aus, um die Versorgung des Brennstoffzellensystems FC mit Kathodengas allein zu gewährleisten. Daher wird zusätzlich noch ein Strom frischer Luft durch die Rohrleitung 18 in den Kathodenraum des Brennstoffzellensystems FC geführt. Um diesen Zusatzluftstroms der durch einen Verdichter V auf Betriebsdruck gebracht wird, etwa auf Betriebstemperatur des Brennstoffzellensystems FC zu erwärmen, ist außer dem Luftvorwärmer $LW_2$ noch ein Luftvorwärmer $LW_1$ vorgesehen, der heizseitig in die Leitung 12 eingeschaltet ist, durch die das weitestgehend abgekühlte Verbrennungsgas abgeleitet wird.

Diese Abwandlungen der Erfindung könnten auch im Rahmen der Ausführungsformen gemäß Figuren 1-3 angewendet werden. Einen wesentlichen Fortschritt im Hinblick auf einen möglichst hohen Wirkungsgrad der Energieumwandlung erzielt man jedoch insbesondere durch die zusätzliche Einbeziehung eines Dampfturbinenprozesses in das erfindungsgemäße Verfahren. In Figur 4 ist die dafür im wesentlichen vorgesehene anlagentechnische Ergänzung durch eine strichpunktierte Linie eingerahmt und hervorgehoben worden.

Bevor das in der Regel auf nahezu Umgebungsdruck entspannte Verbrennungsgas nach Durchlaufen des Dampferzeugers $D_2$ bzw. des Luftvorwärmers $LW_2$ in den Luftvorwärmer $LW_1$ eintritt, wird es in einer Trennanlage MD (z.B. Membransieb) in zwei verschiedene Teilströme aufgespalten, nämlich in einen echten Abgasstrom, der durch die Leitung 12 abgeleitet wird, und in einen Dampfstrom, der aus der Trennanlage MD durch die separate Leitung 23 abgeleitet wird. Wesentlich ist es, daß dieses Trennaggregat MD den im Verbrennungsgas enthaltenen Wasseranteil nicht in flüssiger Form (wie beispielsweise mittels Kondensator) sondern dampfförmig abtrennt. Dieser Dampf wird wegen seines niedrigen Drucks durch einen entsprechenden Niederdruck-Dampfeingang auf eine Dampfturbine TD gegeben und dort auf Unterdruck entspannt. Dies wird dadurch ermöglicht, daß der an die Dampfturbine TD über die Leitung 19 angeschlossene Kondensator C unter Vakuum betrieben wird. Ohne eine Abtrennung der gasförmigen Bestandteile des Verbrennungsgasstroms im Trennaggregat MD wäre das erforderliche Vakuum im Kondensator nicht in technisch und wirtschaftlich sinnvoller Weise aufrechtzuerhalten.

Die Dampfturbine TD wird außerdem über die Leitung 22b mit Dampf höheren Drucks beaufschlagt. Dieser Dampf wird erzeugt im Rahmen der Kühlung des Brennstoffzellensystems FC, die in den anderen Figuren nicht gesondert dargestellt und erläutert wurde. Als Kühlflüssigkeit wird dafür ein Teil des im Kondensator C erzeugten Kondensates verwendet, das über die Leitung 20 und die Leitung 22a dem Kühlsystem des Brennstoffzellensystems FC zugeführt wird. Überschüssiges Kondensat kann durch die Leitung 21 abgezogen und beispielsweise zur Dampferzeugung in den Dampferzeugern $D_1$ und $D_2$ oder als wertvolles entmineralisiertes Wasser in anderen Prozessen verwendet werden. Da das erfindungsgemäße Verfahren auf einer fortlaufenden Oxidation von $H_2$ zu $H_2O$ beruht, wird zwangsläufig ein Überschuß an Wasser und somit ein wertvolles Nebenprodukt erzeugt.

Die durch die Entspannung des Niederdruckdampfs und des Dampfs höheren Drucks entstehende mechanische Energie wird im vorliegenden Fall durch den an die Dampfturbine TD angekoppelten elektrischen Generator GD in Wechselstrom umgesetzt. Selbstverständlich können die beiden Generatoren GD und G körperlich in einem Aggregat zusammengefaßt oder mechanisch miteinander gekoppelt sein.

Der in den Dampferzeugern $D_1$ und $D_2$ produzierte Dampf wird zweckmäßigerweise insbesondere zur bereits erwähnten Turbinenschaufelkühlung und Einleitung in die Brennkammern B1 und B2 (auch zur Regelung der Temperatur des Verbrennungsgases) eingesetzt. Es sind selbstverständlich auch Verwendungen des erzeugten Dampfes außerhalb des erfindungsgemäßen Verfahrens denkbar. Allerdings wird in einem solchen Fall zwangsläufig der Anteil der in mechanische oder elektrische Energie umgesetzten chemisch gebundenen Energie des Primärbrennstoffs verringert.

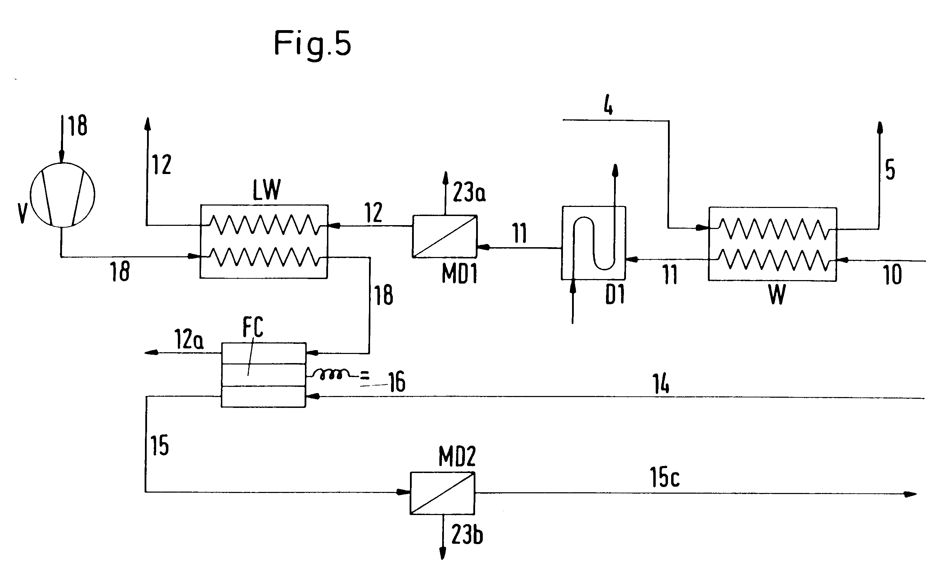

In den in den Figuren 1 bis 4 dargestellten Ausführungsformen wurde stets davon ausgegangen, daß das Kathodenabgas (z.B. beim Typ PAFC) den im Brennstoffzellensystem FC entstehenden $H_2O$-Anteil enthält. Das muß aber nicht immer der Fall sein. Figur 5 zeigt daher in einem entsprechenden Ausschnitt aus einem Gesamtanlagenschema eine Variante, bei der das Brennstoffzellensystem auf der Basis eines alkalischen Elektrolyten (AFC) arbeitet. In diesem Fall wird zwar auch wieder über eine Leitung 14 ein $H_2$-reiches Gas dem Anodenraum zugeführt. Der in der Brennstoffzelle FC gebildete Wasserdampfanteil verläßt diese aber im Anodenabgas durch die Leitung 15. Zur Gewinnung des Dampfes ist daher an die Leitung 15 ein Trennaggregat $MD_2$ angeschlossen. Der abgetrennte Dampf kann durch die Leitung 23b beispielsweise wiederum auf einer nicht dargestellten Dampfturbine entspannt werden, während der gasförmige Teil über die Leitung 15c zur Nutzung seiner brennbaren Bestandteile den (nicht dargestellten) Brennkammern zugeführt wird.

Da das verbrennungsgas aus den Brennkammern Bestandteile enthält, die die Lebensdauer alkalischer Brennstoffzellen erheblich beeinträchtigen, wird dieses Verbrennungsgas zweckmäßigerweise nicht als Kathodengas zur $O_2$-versorgung der Brennstoffzelle FC verwendet. Hierfür wird sinnvollerweise Frischluft eingesetzt, die im Verdichter V auf Betriebsdruck verdichtet und im Luftvorwärmer LW mit Hilfe der im Verbrennungsgas enthaltenen Wärme auf indirektem Wege vorgewärmt wird. Der Verdichter V und der Luftvorwärmer LW sind in die Luftzufuhrleitung 18 eingeschaltet. Um den im Verbrennungsgas enthaltenen Wasserdampfanteil nutzen zu können, kann zwischen den Rohrleitungsteilsträngen 11 und 12 ein entsprechendes Trennaggregat $MD_1$ (z.B. Membransieb) angeordnet sein. Der abgetrennte Dampf wird über die Rohrleitung 23a abgezogen und z.B. auf einer Dampfturbine entspannt.

Die Wirksamkeit des erfindungsgemäßen Verfahrens wird an dem folgenden Ausführungsbeispiel deutlich, das sich auf eine Anlagenkonfiguration bezieht, wie sie in Figur 4 dargestellt ist, so daß sich eine nochmalige Schilderung der Einzelheiten weitestgehend erübrigt. Zu erwähnen ist allerdings, daß das eingesetzte Kohlenwasserstoff/Wasserdampf-Gemisch im Wärmeaustauscher W auf Vorwärmtemperatur für die Dampfreformer R1 und R2 aufgewärmt wurde. Diese zweckmäßige Ausführungsform der Erfindung ist in Figur 4 nicht gesondert dargestellt worden. Durch die Leitung 1 wurde dem Kompressor K bereits vorgekühlte Luft zugeführt. Der im Dampferzeuger $D_1$ erzeugte Dampf wurde teilweise zur Schaufelkühlung der Kompressorantriebsturbine KT eingesetzt und teilweise der Brennkammer B1 zugeführt. Entsprechend wurde der im Dampferzeuger $D_2$ erzeugte Dampf teilweise zur Schaufelkühlung der Gasturbine T genutzt bzw. in die zweite Brennkammer B2 geleitet. Ein weiterer Teil des erzeugten Dampfes diente als Einsatzmaterial für die beiden Dampfreformer R1 und R2. Der Verfahrensablauf ergibt sich aus der nachfolgenden tabellarischen Aufstellung der wesentlichen Prozeßparameter:

Eingesetzter Brennstoff:                                  Erdgas

(überwiegend $CH_4$)

Kompressor K:

    Einlaß-Temperatur                                    4 °C

    Auslaß-Temperatur                                  160 °C

    Auslaßdruck                                          4 bar

Wärmeaustauscher W:

    Temperaturanstieg der Verbrennungsluft          405 K

    Temperaturabfall des Verbrennungsgases          305 K

Brennkammer B1:

    Temperaturanstieg durch Verbrennung             685 K

Kompressor-Antriebsturbine KT:

    Einlaß-Temperatur                               1250 °C

    Druckverhältnis über Turbine                    1,45

    Auslaß-Temperatur                               1150 °C

Reformer R1:

    Einlaß-Temperatur des überhitzten

    Kohlenwasserstoff/Dampf-Gemisches               550 °C

    Auslaß-Temperatur des Verbrennungsgases         610 °C

    Auslaß-Temperatur des $H_2$-reichen Gases       720 °C

Brennkammer B2:

    Temperaturanstieg durch Verbrennung             595 K

Gasturbine T:

    Einlaß-Temperatur                       1205 °C

    Druckverhältnis                            2,47

    Auslaß-Temperatur                    980 °C

Dampfreformer R2:

    Einlaß-Temperatur des Kohlenwasserstoff/

    Dampf-Gemisches                    550 °C

    Auslaß-Temperatur des Verbrennungsgases   610 °C

    Auslaß-Temperatur des $H_2$-reichen Gases   720 °C

Dampferzeuger $D_1$:

    Wassereintrittstemperatur              15 °C

    Dampfaustrittstemperatur             290 °C

    Dampfdruck                         4,5 bar

    Temperaturabfall des Verbrennungsgases   130 K

Brennstoffzelle:                       Typ PAFC

    Kathodengaseintrittstemperatur        175 °C

    Kathodengasaustrittstemperatur        200 °C

    Anodengaseintrittstemperatur         175 °C

    Anodengasaustrittstemperatur         200 °C

    Kühlung der Brennstoffzelle durch

    Erzeugung von Hochdruckdampf

Lufterhitzer $LW_2$:

    Eintrittstemperatur der Luft          15 °C

    Temperaturanstieg der Luft         160 K

    Temperaturabfall des Verbrennungs-

    gasteilstroms                     150 K

```
Dampferzeuger D₂:
    Wassereintrittstemperatur                      15  °C
    Dampfaustrittstemperatur                      185  °C
    Dampfdruck                                      3 bar
    Temperaturabfall Verbrennungsgasteilstrom     100 K


Dampfturbine TD:
    Hochdruckdampfeintrittstemperatur             165  °C
    Hochdruckdampfeintrittsdruck                    6,5  bar
    Niederdruckdampfeintrittstemperatur           100  °C
    Niederdruckdampfeintrittsdruck                  1    bar
    Kondensatordruck                                0,15 bar


Elektrische Leistungen:
    Generator G der Gasturbine T                 1860 KW_el
    Generator GD der Dampfturbine TD             1935 KW_el
    Brennstoffzelle FC                          16375 KW_el


Elektrischer Wirkungsgrad auf der
Basis des unteren Heizwertes:                    75,2 %
```

Im Vergleich zu bekannten Verfahren zur Erzeugung elektrischer oder mechanischer Energie aus fossilen Brennstoffen hat das erfindungsgemäße Verfahren nicht nur einen erheblich höheren Wirkungsgrad und setzt dementsprechend beträchtlich weniger $CO_2$ bezogen auf die elektrische Leistung frei, sondern liefert darüberhinaus auch ein Abgas mit minimalem Gehalt an Stickoxiden. Außerdem fällt als Nebenprodukt hochwertiges Prozeßwasser an, das für anderweitige Zwecke eingesetzt werden kann.

Von besonderem Vorteil ist es dabei, daß die Aggregatekombination "Brennkammer/Turbine/Reformer", die in den Figuren 3 und 4 jeweils doppelt (seriell geschaltet) vorgesehen ist, jeweils praktisch baugleich und in ein Gehäuse integriert ausgeführt werden kann, so daß trotz einer relativ komplizierten Gesamtschaltung letztlich doch eine vergleichsweise einfache und kostengünstige Ausführung einer erfindungsgemäßen Anlage möglich ist.

**Patentansprüche**

1. Verfahren zur kombinierten Erzeugung elektrischer und mechanischer Energie aus der Oxidation von Brennstoff unter Anwendung folgender Verfahrensschritte:
   - Erzeugung eines $H_2$-haltigen Gases durch endotherme Reaktion von Kohlenwasserstoffverbindungen in mindestens einer Stufe bei indirekter Beheizung der endothermen Reaktion,
   - Führen mindestens eines Teils, insbesondere der Gesamtmenge des in der endothermen Reaktion erzeugten $H_2$-haltigen Gases als Anodengas durch ein Brennstoffzellensystem unter Erzeugung elektrischer Energie,
   - Einleitung des einen Restgehalt an $H_2$ enthaltenden Anodenabgases des Brennstoffzellensystems in mindestens eine Verbrennungsstufe zur Erzeugung eines heißen, erhöhten Druck aufweisenden Verbrennungsgases,
   - Komprimierung eines $O_2$-haltigen Gases,

10

- Einleitung des komprimierten $O_2$-haltigen Gases in die Verbrennungsstufe bzw. -stufen,
- Erzeugung mechanischer Energie durch mindestens teilweise Entspannung des heißen Verbrennungsgases in mindestens einer Gasturbine,
- Nutzung des mindestens teilweise entspannten Verbrennungsgases oder eines Teilstroms dieses Verbrennungsgases für die indirekte Beheizung der Stufe bzw. Stufen der endothermen Reaktion,
- Bereitstellung der Antriebsenergie für die Kompression des $O_2$-haltigen Gases durch teilweise Entspannung des bereits erwärmten $O_2$-haltigen Gases auf einer Kompressorantriebsturbineneinheit oder durch Entnahme eines Teils der erzeugten mechanischen Energie.

dadurch gekennzeichnet,

- daß das in mindestens einer Stufe der endothermen Reaktion teilweise abgekühlte Verbrennungsgas zur Erwärmung des komprimierten $O_2$-haltigen Gases durch indirekten Wärmeaustausch genutzt wird,
- daß die Erzeugung des einen erhöhten Druck aufweisenden Verbrennungsgases mit $O_2$-Überschuß erfolgt und
- daß das in mindestens einer Gasturbine mindestens teilweise entspannte Verbrennungsgas vor oder nach der Abgabe von Wärme an das komprimierte $O_2$-haltige Gas als Kathodengas dem Brennstoffzellensystem zugeführt wird.

2. Verfahren nach Anspruch 1,
dadurch gekennzeichnet,
daß als Brennstoffzellensystem Niedertemperatur-Brennstoffzellen, insbesondere Brennstoffzellen mit Elektrolyten auf der Basis Phosphorsäure (PAFC), Alkali (AFC) oder Festpolymer (SP(E)FC) verwendet werden.

3. Verfahren nach Anspruch 2,
dadurch gekennzeichnet,
daß die Erzeugung des einen erhöhten Druck aufweisenden Verbrennungsgases in mindestens zwei Stufen erfolgt.

4. Verfahren nach Anspruch 3,
dadurch gekennzeichnet,
daß nach jeder Verbrennungsstufe eine mindestens teilweise Entspannung des Verbrennungsgases auf einer der Gasturbinen stattfindet.

5. Verfahren nach einem der Ansprüche 3 bis 4,
dadurch gekennzeichnet,
daß das mindestens teilweise entspannte Verbrennungsgas hinter einer Gasturbine jeweils zur indirekten Beheizung einer Stufe der in mehreren getrennten Stufen erfolgenden endothermen Reaktion benutzt wird.

6. Verfahren nach Anspruch 5,
dadurch gekennzeichnet,
daß die in den verschiedenen Stufen der endothermen Reaktion erzeugten Teilmengen des $H_2$-haltigen Gases gesammelt und dann dem Anodenraum des Brennstoffzellensystems zugeführt werden.

7. Verfahren nach einem der Ansprüche 1 bis 6,
dadurch gekennzeichnet,
daß das erzeugte $H_2$-haltige Gas vor der Zuführung zum Brennstoffzellensystem einer CO/$H_2$-Shiftreaktion unterzogen wird.

8. Verfahren nach einem der Ansprüche 1 bis 7,
dadurch gekennzeichnet,
daß das erzeugte $H_2$-haltige Gas vor der Zuführung zum Brennstoffzellensystem einer Reinigung unterzogen wird, in der Gaskomponenten abgetrennt werden, und daß die abgetrennten, brennbare Bestandteile enthaltenden Gaskomponenten bei der Erzeugung des Verbrennungsgases mit genutzt werden.

9. Verfahren nach einem der Ansprüche 1 bis 8,
dadurch gekennzeichnet,
daß bei der Erzeugung des Verbrennungsgases zusätzlich Primärbrennstoff, insbesondere Erdgas, eingesetzt wird.

10. Verfahren nach einem der Ansprüche 1 bis 8,
dadurch gekennzeichnet,
daß die Restwärme des Kathodenabgases des Brennstoffzellensystems für Heizzwecke, die von der Erzeugung mechanischer oder elektrischer Energie unabhängig sind, genutzt wird.

11. Verfahren nach einem der Ansprüche 1 bis 10,
dadurch gekennzeichnet,
daß das in dem Brennstoffzellensystem und/oder bei der Erzeugung des Verbrennungsgases gebildete Wasser aus dem Brennstoffzellenabgas (Kathoden- oder Anodenabgas) bzw. aus dem Verbrennungsgas mindestens zu einem Teil abgetrennt wird.

12. Verfahren nach Anspruch 11,
dadurch gekennzeichnet,
daß die Abtrennung des Wassers in Form von Wasserdampf erfolgt.

13. Verfahren nach einem der Ansprüche 1 bis 12,
dadurch gekennzeichnet,
daß das Brennstoffzellensystem unter Erzeugung von Wasserdampf gekühlt wird.

14. Verfahren nach Anspruch 12 oder 13,
dadurch gekennzeichnet,
daß der Wasserdampf zur Arbeitsleistung in einem Dampfturbinenprozeß eingesetzt wird.

15. Verfahren nach Anspruch 14,
dadurch gekennzeichnet,
daß der Wasserdampf nach Entspannung im Dampfturbinenprozeß auf einen unter Umgebungsdruck liegenden Druck zur Gewinnung von Prozeßwasser kondensiert wird.

16. Verfahren nach einem der Ansprüche 1 bis 15,
dadurch gekennzeichnet,
daß ein Teil der im Verbrennungsgas enthaltenen Wärme zur Erzeugung von Wasserdampf durch indirekten Wärmeaustausch benutzt wird.

17. Verfahren nach einem der Ansprüche 12 bis 16,
dadurch gekennzeichnet,
daß mindestens ein Teil des Wasserdampfs zur Turbinenschaufelkühlung eingesetzt wird.

18. Verfahren nach einem der Ansprüche 12 bis 17,
dadurch gekennzeichnet,
daß mindestens ein Teil des Wasserdampfs in den Verbrennungsraum geführt wird, in dem das Verbrennungsgas erzeugt wird.

19. Verfahren nach einem der Ansprüche 12 bis 18,
dadurch gekennzeichnet,
daß ein Teil des Wasserdampfs als Einsatzmaterial für die als Dampfreformierung ablaufende endotherme Reaktion der Kohlenwasserstoffe benutzt wird.

20. Verfahren nach einem der Ansprüche 1 bis 9,
dadurch gekennzeichnet,
daß die erzeugte mechanische Energie durch ein Generatorsystem in elektrischen Wechselstrom umgesetzt wird.

21. Anlage zur Durchführung des Verfahrens nach Anspruch 1,
- mit einem Kompressorsystem (K) zur Verdichtung von $O_2$-haltigem Gas,
- mit mindestens einer Brennkammer (B, B1, B2) zur mindestens teilweisen Verbrennung eines $H_2$ enthaltenden Gases,
- mit einem aus mindestens einer Gasturbine (KT, T) bestehenden Gasturbinensystem, das mechanische Energie zur Nutzung außerhalb der Anlage und die Antriebsenergie für das Kompressorsystem (K) liefert,
- mit einem Rohrleitungssystem (5, 6), durch welches das verdichtete $O_2$-haltige Gas unmittelbar und/oder mittelbar nach Durchlaufen mindestens einer der Brennkammern (B, B1, B2) in Form von heißem Verbrennungsgas der bzw. den Gasturbinen (KT, T) zuführbar ist,
- mit mindestens einem Reaktor für eine endotherme Reaktion (R, R1, R2) zur Erzeugung eines $H_2$-reichen Gases, der indirekt durch das heine Abgas einer Gasturbine (KT, T) beheizbar ist, ferner
- mit einem Rohrleitungssystem (14, 14a, 14b), durch welches das $H_2$-reiche Gas dem Anodenraum eines Brennstoffzellensystems (FC) zuführbar ist, und
- mit einem Rohrleitungssystem (15, 15a, 15b, 15c), durch welches das einen Rest an $H_2$ enthaltende Gas vom Ausgang des Anodenraums der bzw. den Brennkammern (B, B1, B2) zuführbar ist,
dadurch gekennzeichnet,
- daß ein Wärmeaustauscher (W) zur indirekten Erwärmung des verdichteten $O_2$-haltigen Gases vorgesehen ist,
- daß ein Rohrleitungssystem (10, 10a, 10b, 10c, 10d) vorgesehen ist, durch welches das Turbinenabgas unmittelbar oder nach Wärmeabgabe in mindestens einem Reaktor (R, R1, R2) dem Wärmeaustauscher (W) für die Erwärmung des verdichteten $O_2$-haltigen Gases zuführbar ist,
- und daß ein Rohrleitungssystem (10d oder 11 + 11a) vorgesehen ist, durch welches das Turbinenabgas als $O_2$-haltiges Gas dem Kathodenraum des Brennstoffzellensystems (FC) zuführbar ist.

22. Anlage nach Anspruch 21,
dadurch gekennzeichnet,
daß das Rohrleitungssystem (10d) das Turbinenabgas von mindestens einem Reaktor (R) zu dem Kathodenraum des Brennstoffzellensystems (FC) führt.

23. Anlage nach Anspruch 21,
dadurch gekennzeichnet,
daß ein Rohrleitungssystem (11, 11a) das Turbinenabgas von dem Wärmeaustauscher (W) zu dem Kathodenraum des Brennstoffzellensystems (FC) führt.

24. Anlage nach einem der Ansprüche 21 bis 23,
dadurch gekennzeichnet,
daß das Kompressorsystem (K) aus mindestens zwei Kompressorstufen (K1, K2) besteht und zwischen den Kompressorstufen (K1, K2) ein Zwischenkühler geschaltet ist.

25. Anlage nach einem der Ansprüche 21 bis 24,
dadurch gekennzeichnet,
daß sowohl eine separate Gasturbine (KT) für den Antrieb des Kompressorsystems (K) als auch mindestens eine davon getrennte Gasturbine (T) zur Erzeugung der nach außen abgebbaren mechanischen Energie vorgesehen sind.

26. Anlage nach einem der Ansprüche 21 bis 24,
dadurch gekennzeichnet,
daß eine einzige Gasturbine (T) für den Antrieb des Kompressorsystems (K) und die Erzeugung der nach außen abgebbaren mechanischen Energie vorgesehen ist.

27. Anlage nach Anspruch 25,
dadurch gekennzeichnet,
daß das verdichtete $O_2$-haltige Gas durch eine Rohrleitung (5) unmittelbar vom Wärmeaustauscher (W) zur Kompressorantriebsturbine (KT) führbar ist.

28. Anlage nach einem der Ansprüche 21 bis 26,
dadurch gekennzeichnet,
daß unmittelbar vor jeder Gasturbine (KT, T) jeweils eine Brennkammer (B1, B2) angeordnet ist.

29. Anlage nach einem der Ansprüche 21 bis 28,
dadurch gekennzeichnet,
daß die Gasturbinen (KT, T) hinsichtlich des Durchlaufs des Verbrennungsgases in Serie geschaltet sind.

30. Anlage nach einem der Ansprüche 21 bis 29,

dadurch gekennzeichnet,
daß in das Rohrleitungssystem (14, 14b) für die Zuleitung des $H_2$-reichen Gases zum Anodenraum des Brennstoffzellensystems (FC) mindestens ein CO/$H_2$-Shiftreaktor (5) eingeschaltet ist.

31. Anlage nach einem der Ansprüche 21 bis 30,
dadurch gekennzeichnet,
daß in das Rohrleitungssystem (14, 14b) für die Zuleitung des $H_2$-reichen Gases zum Anodenraum des Brennstoffzellensystems (FC) mindestens eine Gasreinigungsanlage (P) eingeschaltet ist.

32. Anlage nach einem der Ansprüche 21 bis 31,
dadurch gekennzeichnet,
daß die Gasturbine (T) zur Erzeugung der nach außen abgebbaren mechanischen Energie mit einem elektrischen Generator (G) gekoppelt ist.

33. Anlage nach einem der Ansprüche 21 bis 32,
dadurch gekennzeichnet,
daß das Brennstoffzellensystem (FC) mit einem Wechselrichter zur Erzeugung von elektrischem Wechselstrom gekoppelt ist.

34. Anlage nach Anspruch 32,
dadurch gekennzeichnet,
daß das Brennstoffzellensystem (FC) mit dem Generator (G) elektrisch gekoppelt ist.

35. Anlage nach einem der Ansprüche 21 bis 34,
dadurch gekennzeichnet,
daß in die Rohrleitung (12, 12a, 15), durch die das Kathoden- bzw. Anodenabgas mit dem in dem Brennstoffzellensystem (FC) gebildeten Wasser geführt wird, eine Trennvorrichtung (MD, $MD_2$) eingeschaltet ist, durch die das gebildete Wasser dampfförmig von dem Abgas abtrennbar ist.

36. Anlage nach einem der Ansprüche 21 bis 35,
dadurch gekennzeichnet,
daß in die das Verbrennungsgas führende Rohrleitung (11, 12) eine Trennvorrichtung ($MD_1$) eingeschaltet ist zur Abtrennung des im Verbrennungsgas enthaltenen Wassers in Dampfform.

37. Anlage nach einem der Ansprüche 21 bis 36,
dadurch gekennzeichnet,
daß in das das Verbrennungsgas führende Rohrleitungssystem (11, 11a, 12, 12a, 12c) mindestens ein Dampferzeuger ($D_1$, $D_2$) eingeschaltet ist.

38. Anlage nach einem der Ansprüche 35 bis 37,
dadurch gekennzeichnet,
daß mindestens ein Dampfturbinensystem (TD) vorgesehen ist, auf dem mindestens ein Teil des Wasserdampfs zur Erzeugung mechanischer Energie entspannbar ist.

39. Anlage nach Anspruch 38,
dadurch gekennzeichnet,
daß das Dampfturbinensystem (TD) mit einem elektrischen Generator (GD, G) mechanisch gekoppelt ist.

40. Anlage nach einem der Ansprüche 21 bis 39,
dadurch gekennzeichnet,
daß der Kathodenraum des Brennstoffzellensystems (FC) mit einer Frischluftzuführleitung (18) verbunden ist, in die mindestens ein mit dem Verbrennungsgas beheizbarer Luftvorwärmer (LW, $LW_1$, $LW_2$) eingeschaltet ist.

41. Anlage nach einem der Ansprüche 38 bis 40,
dadurch gekennzeichnet,
daß an das Dampfturbinensystem (TD) ein mit Unterdruck betreibbarer Kondensator (C) angeschlossen ist.

42. Anlage nach einem der Ansprüche 21 bis 41,

dadurch gekennzeichnet,
daß der oder die Reaktoren für die endotherme Reaktion (R, R$_1$, R$_2$) als Dampfreformer ausgebildet sind.

43. Anlage nach einem der Ansprüche 21 bis 42,
dadurch gekennzeichnet,
daß mindestens ein Wärmeaustauscher (W$_1$) vorgesehen ist, mit dem Wärme von dem in mindestens einem Reaktor (R, R$_1$, R$_2$) erzeugten H$_2$-reichen Gas auf das mindestens einer Brennkammer (B, B$_1$, B$_2$) zuzuführende H$_2$ enthaltende Gas indirekt übertragbar ist.

44. Anlage nach einem der Ansprüche 21 bis 43,
dadurch gekennzeichnet,
daß das Brennstoffzellensystem (FC) als Niedertemperaturbrennstoffsystem ausgebildet ist, insbesondere als Brennstoffzellensystem mit Elektrolyten auf der Basis Phosphorsäure (PAFC), Alkali (AFC) oder Festpolymer (SP(E)FC).

## Claims

1. Process for combined production of electrical and mechanical energy from oxidation of fuel, using the following stages:
    - production of a gas containing hydrogen by means of an endothermic reaction of hydrocarbon bonds in at least one stage with indirect heating of a said endothermic reaction,
    - feeding of at least part of gas, all the hydrogen-containing gas produced in a said endothermic reaction in particular, through a fuel cell system, as an anodal gas, with production of electrical energy,
    - introduction of remaining hydrogen-containing anodal waste gas of a said fuel cell system into at least one combustion stage for producing a hot combustion gas having an increased pressure,
    - compression of a gas containing oxygen,
    - introduction of a said oxygen-containing gas into a said combustion stage or stages,
    - production of mechanical energy through at least partial expansion of a said combustion gas in at least one gas turbine,
    - use of at least partially expanded combustion gas or a partial current of this combustion gas for indirect heating of a said stage or stages of a said endothermic reaction,
    - preparation of driving energy for compressing a said oxygen-containing gas by means of partial expansion of an already heated said oxygen-containing gas on a compressor drive-turbine unit or through removal of a part of said produced mechanical energy;
    wherein
    - combustion gas which is partly cooled in at least one stage of an endothermic reaction is used to heat compressed gas containing oxygen by means of indirect heat-exchange,
    - production of a combustion gas having an increased pressure occurs with excess oxygen, and
    - combustion gas which is at least partly expanded in at least one gas turbine is supplied as a cathodal gas for a system of fuel-cells before of after giving-off of heat to a said oxygen-containing gas.

2. Process in accordance with claim 1,
    wherein
    low-temperature combustion cells, combustion cells with electrolytes based on phosphoric acid (PAFC), alkali (AFC) or a solid polymer (SP(E)FC) in particular, are used as a system of fuel-cells.

3. Process in accordance with claim 2,
    wherein
    production of a combustion gas having increased pressure occurs in at least two stages.

4. Process in accordance with claim 3,
    wherein
    at least partial expansion of a combustion gas takes place on a gas turbine after each combustion stage.

5. Process in accordance with either of claims 3 or 4,
    wherein
    at least partly expanded combustion gas is used in each case behind a gas turbine for indirect heating of a stage of an endothermic reaction occurring in several separate stages.

6. Process in accordance with claim 5,
wherein
part quantities of hydrogen-containing gas produced in different stages of an endothermic reaction are collected and then fed to an anodal space of a system of fuel-cells.

7. Process in accordance with any one of claims 1 to 6,
wherein
hydrogen-containing gas is subjected to a CO/H$_2$ shift reaction before being fed to a system of combustion cells.

8. Process in accordance with any one of claims 1 to 7,
wherein
hydrogen-containing gas is subjected to purification, by means of which gas constituents are separated off, before being fed to a system of fuel-cells, and the gas components which are separated off which contain constituents which are combustible are used in producing combustion gas.

9. Process in accordance with any one of claims 1 to 8,
wherein
primary fuel, natural gas in particular, is additionally used in producing combustion gas.

10. Process in accordance with any one of claims 1 to 8,
wherein
remaining heat of cathodal waste gas of a system of fuel-cells is used for heating purposes which are independent of production of mechanical or electrical energy.

11. Process in accordance with any one of claims 1 to 10,
wherein
water formed in a system of fuel-cells and/or in producing combustion gas is at least partially separated off from waste gas of fuel cells (cathodal or anodal waste gas) or from combustion gas.

12. Process in accordance with claim 11,
wherein
water is separated off in the form of steam.

13. Process in accordance with any one claims 1 to 12,
wherein
a system of fuel-cells is cooled with production of steam.

14. Process in accordance with claim 12 or claim 13,
wherein
steam is used productively in a steam turbine process.

15. Process in accordance with claim 14,
wherein
steam is condensed after expansion in a steam turbine process to a pressure below ambient pressure, in order to obtain process water.

16. Process in accordance with any one of claims 1 to 15,
wherein
part of heat contained in a combustion gas is used to produce steam through indirect heat exchange.

17. Process in accordance with any one of claims 12 to 16,
wherein
at least part of steam is used to cool turbine blades.

18. Process in accordance with any one of claims 12 to 17,
wherein
at least part of steam is fed into a combustion space in which combustion gas is produced.

19. Process in accordance with any one claims 12 to 18,

wherein

some of steam is used as a basis for an endothermic reaction of hydrocarbons which is run to re-form steam.

20. Process in accordance with any one of claims 1 to 9,
wherein
produced mechanical energy is converted into an electrical, alternating-current, by means of a generator system.

21. Installation for effecting the process in accordance with claim 1,
   - with a compressor system (K) for condensing gas containing oxygen,
   - with at least one combustion chamber (B, B1, B2) for at least partly burning a gas containing hydrogen,
   - with a gas turbine system constituted of a gas turbine (KT, T), which supplies mechanical energy for use outside the said installation and drive-energy for a said compressor system (K),
   - with a feed-pipe system (5,6) through which condensed oxygen-containing gas can be directly and/or indirectly fed, in the form of hot combustion gas, to a gas turbine or gas turbines (KT, T) after passing through at least one of combustion chambers (B, B1, B2),
   - with at least one reactor for an endothermic reaction (R, R1, R2) for producing a gas which is rich in hydrogen which can be indirectly heated by hot waste gas of a gas turbine (KT, T), moreover
   - with a system of feed-pipes (14, 14a, 14b), through which a said hydrogen-rich gas can be fed to an anodal space of a system of fuel-cells (FC), and
   - with a system of feed-pipes (15, 15a, 15b, 15c), through which remaining hydrogen-containing gas from an outlet of a said anodal space can be fed to a combustion chamber or combustion chambers (B, B1, B2),
   wherein
   - a heat-exchanger (W) is provided to indirectly heat condensed oxygen-containing gas,
   - a system of feed-pipes (10, 10a, 10b, 10c, 10d) is provided, through which turbine waste-gas can be fed directly, or after giving off of heat, into at least one reactor (R, R1, R2) of a said heat-exchanger (W) for heating a said condensed oxygen-containing gas,
   - and a system of feed-pipes (10d or 11 + 11a) is provided, through which turbine waste-gas can be fed to a cathodal space of a system of fuel cells (FC) as oxygen-containing gas.

22. Installation in accordance with claim 21,
wherein
a system of feed-pipes (10d) guides turbine waste-gas from at least one reactor (R) to a cathodal space of a system of fuel cells (FC).

23. Installation in accordance with claim 21,
wherein
a system of feed-pipes (11, 11a) guides turbine waste gas from a heat-exchanger (W) to a cathodal space of a system of fuel-cells (FC).

24. Installation in accordance with any one of claims 21 to 23,
wherein
a compressor-system (K) is constituted of at least two compressor stages (K1, K2) and an intermediate cooler is connected between said compressor stages (K1, K2).

25. Installation in accordance with any one of claims 21 to 24,
wherein
both a separate gas turbine (KT) for driving a compressor-system (K) and also at least one gas turbine (T), separated from this said compressor- system, are provided for producing mechanical energy which can be given off outwards.

26. Installation in accordance with any one of claims 21 to 24,
wherein
a single gas turbine (T) is provided to drive a compressor-system (K) and to produce mechanical energy which can be given off outwards.

27. Installation in accordance with claim 25, wherein condensed oxygen-containing gas can be directly directed through a pipe (5) from a heat-exchanger (W) to a compressor drive turbine (KT).

28. Installation in accordance with any one of claims 21 to 26,
    wherein
    a combustion chamber (B1, B2) is in each case disposed directly before each gas turbine (KT, T).

29. Installation in accordance with any one of claims 21 to 28,
    wherein
    gas turbines (KT, T) are connected in series in relation to passage of combustion gas.

30. Installation in accordance with any one of claims 21 to 29,
    wherein
    at least one $CO/H_2$ shift reactor (5) is connected into a feed-pipe system (14, 14b) for feeding hydrogen-rich gas to an anodal space of a system of fuel-cells (FC).

31. Installation in accordance with any one of claims 21 to 30,
    wherein
    at least one gas purification installation (P) is connected into a feed-pipe system (14, 14b) for feeding hydrogen-rich gas to an anodal space of a system of fuel-cells (FC).

32. Installation in accordance with any one of claims 21 to 31,
    wherein
    a gas turbine (T) for producing mechanical energy, which can be given off outwards, is connected to an electrical generator (G).

33. Installation in accordance with any one of claims 21 to 32,
    wherein
    a system of fuel-cells (FC) is connected to a converter for producing alternating, electrical-current.

34. Installation in accordance with claim 32,
    wherein
    a system of fuel-cells (FC) is electrically connected to a generator(G).

35. Installation in accordance with any one of claims 21 to 34,
    wherein
    a separation device (MD, $MD_2$), through which formed water can be separated, in the form of steam, from waste-gas, is connected into a pipe (12, 12a, 15), through which cathodal or anodal waste-gas is guided with water formed in a system of fuel cells (FC).

36. Installation in accordance with any one of claims 21 to 35,
    wherein
    a separation device ($MD_1$), for separation, in the form of steam, of water contained in a said combustion gas, is connected into a pipe (11, 12) which carries combustion gas.

37. Installation in accordance with any one of claims 21 to 36,
    wherein
    at least one steam generator ($D_1$, $D_2$) is connected into a system of feed-pipes (11, 11a, 12, 12a, 12c) which guides combustion gas.

38. Installation in accordance with any one of claims 35 to 37,
    wherein
    at least one steam-turbine system (TD) is provided, on which at least some of steam can be expanded to produce mechanical energy.

39. Installation in accordance with claim 38,
    wherein
    a steam-turbine system (TD) is mechanically connected to an electric generator (GD, G).

40. Installation in accordance with any one of claims 21 to 39,

wherein
a cathodal space of a system of fuel-cells (FC) is connected to an unused-air feed-pipe (18), into which at least one air pre-heater (LW, $LW_1$, $LW_2$) which can he heated with a combustion gas concerned is connected.

41. Installation in accordance with any one of claims 38 to 40,
wherein
a condenser (C) which is operated using negative pressure is connected to a steam-turbine system.

42. Installation in accordance with any one of claims 21 to 41,
wherein
a reactor or reactors for an endothermic reaction (R, $R_1$, $R_2$) is developed as a means of re-forming steam.

43. Installation in accordance with any one of claims 21 to 42,
wherein
at least one heat-exchanger ($W_1$), with which heat can be indirectly transferred from hydrogen-rich gas produced in at least one reactor (R, $R_1$, $R_2$) to hydrogen-containing gas to be guided to at least one combustion chamber (B, $B_1$, $B_2$), is provided.

44. Installation in accordance with any one of claims 21 to 43,
wherein
a system of fuel-cells (FC) is developed as a low-temperature fuel system, as a system of fuel-cells with electrolytes based on phosphoric acid (PAFC), alkali (AFC) or a solid polymer (SP(E)FC), in particular.

## Revendications

1. Procédé pour engendrer, de façon combinée, de l'énergie électrique et mécanique à partir de l'oxydation de combustible en utilisant les étapes de procédé suivantes :
   - création d'un gaz contenant $H_2$ par réaction endothermique d'hydrocarbures en au moins une étape par chauffage indirect de la réaction endothermique,
   - amenée d'au moins une partie, en particulier de la quantité totale du gaz contenant $H_2$ créé dans la réaction endothermique, en tant que gaz anodique, à travers un système de piles à combustible en engendrant de l'énergie électrique,
   - introduction du gaz d'échappement anodique, contenant une quantité résiduelle de $H_2$, du système de piles à combustible dans au moins une étape de combustion pour engendrer un gaz de combustion chaud présentant une pression augmentée,
   - compression d'un gaz contenant $O_2$,
   - introduction du gaz comprimé contenant $O_2$ dans l'étape ou les étapes de combustion,
   - création d'énergie mécanique par détente au moins partielle du gaz de combustion chaud dans au moins une turbine à gaz,
   - utilisation du gaz de combustion au moins partiellement détendu ou d'un courant partiel de ce gaz de combustion pour le chauffage indirect de l'étape ou des étapes de la réaction endothermique,
   - mise à disposition de l'énergie d'entraînement pour la compression du gaz contenant $O_2$ par détente partielle du gaz contenant $O_2$ déjà réchauffé dans une unité de turbine d'entraînement du compresseur ou par soutirage d'une partie de l'énergie mécanique créée,
   caractérisé en ce que :
   - le gaz de combustion refroidi partiellement dans au moins une étape de la réaction endothermique est utilisé pour réchauffer le gaz comprimé contenant $O_2$ par échange thermique indirect,
   - la création du gaz de combustion présentant une pression augmentée est effectuée avec un excès de $O_2$, et
   - le gaz de combustion au moins pareillement détendu dans au moins une turbine à gaz est amené, avant ou après le transfert de chaleur au gaz comprimé contenant $O_2$, en tant que gaz cathodique, au système de piles à combustible.

2. Procédé selon la revendication 1,
caractérisé en ce que, comme système de piles à combustible, des piles à combustible à basse température, en particulier des piles à combustible à électrolytes sur la base d'acide phosphorique (PAFC), d'alcali (AFC) ou de polymère solide (SP(E)FC), sont utilisées.

3. Procédé selon la revendication 2,
caractérisé en ce que le gaz de combustion présentant une pression augmentée est engendré en au moins deux étapes.

4. Procédé selon la revendication 3,
caractérisé en ce que, après chaque étape de combustion, une détente au moins partielle du gaz de combustion a lieu dans une des turbines à gaz.

5. Procédé selon une des revendications 3 à 4,
caractérisé en ce que le gaz de combustion au moins pareillement détendu, derrière une turbine à gaz, est utilisé, à chaque fois, pour le chauffage indirect d'une étape de la réaction endothermique se produisant en plusieurs étapes séparées.

6. Procédé selon la revendication 5,
caractérisé en ce que les quantités partielles, engendrées dans les différentes étapes de la réaction endothermique, du gaz contenant $H_2$ sont rassemblées et, ensuite, amenées à l'espace anodique du système de piles à combustible.

7. Procédé selon une des revendications 1 à 6,
caractérisé en ce que le gaz engendré contenant $H_2$ est soumis, avant l'amenée au système de piles à combustible, à une réaction de transfert $CO/H_2$.

8. Procédé selon une des revendications 1 à 7,
caractérisé en ce que le gaz engendré contenant $H_2$, avant l'amenée au système de piles à combustible, est soumis à une purification dans laquelle des composants gazeux sont séparés, et en ce que les composants gazeux séparés, contenant des constituants combustibles, sont utilisés lors de la création du gaz de combustion.

9. Procédé selon une des revendications 1 à 8,
caractérisé en ce que, lors de la création du gaz de combustion, du combustible primaire supplémentaire, en particulier du gaz naturel, est utilisé.

10. Procédé selon une des revendications 1 à 8,
caractérisé en ce que la chaleur résiduelle du gaz d'échappement cathodique du système de piles à combustible est utilisée dans des buts de chauffage, qui sont indépendants de la création d'énergie électrique ou mécanique.

11. Procédé selon une des revendications 1 à 10,
caractérisé en ce que l'eau formée dans le système de piles à combustible et/ou lors de la création du gaz de combustion est séparée du gaz d'échappement des piles à combustible (gaz d'échappement cathodique ou anodique) ou du gaz de combustion, au moins partiellement.

12. Procédé selon la revendication 11,
caractérisé en ce que la séparation de l'eau est effectuée sous forme de vapeur d'eau.

13. Procédé selon une des revendications 1 à 12,
caractérisé en ce que le système de piles à combustible est refroidi en engendrant de la vapeur d'eau.

14. Procédé selon la revendication 12 ou 13,
caractérisé en ce que la vapeur d'eau est utilisée pour la puissance de travail dans un processus utilisant une turbine à vapeur.

15. Procédé selon la revendication 14,
caractérisé en ce que la vapeur d'eau, après détente dans le processus utilisant une turbine à vapeur, est condensée à une pression inférieure à la pression de l'environnement pour produire l'eau du procédé.

16. Procédé selon une des revendications 1 à 15,
caractérisé en ce qu'une partie de la chaleur contenue dans le gaz de combustion est utilisée pour engendrer de la vapeur d'eau par échange thermique indirect.

17. Procédé selon une des revendications 12 à 16,
caractérisé en ce qu'au moins une partie de la vapeur d'eau est utilisée pour refroidir les ailettes des turbines.

18. Procédé selon une des revendications 12 à 17,
caractérisé en ce qu'au moins une partie de la vapeur d'eau est amenée dans l'espace de combustion, dans lequel le gaz de combustion est engendré.

19. Procédé selon une des revendications 12 à 18,
caractérisé en ce qu'une partie de la vapeur d'eau est utilisée comme charge pour la réaction endothermique, se déroulant en tant que reformage à la vapeur, des hydrocarbures.

20. Procédé selon une des revendications 1 à 9,
caractérisé en ce que l'énergie mécanique engendrée est transformée par un système de générateur en courant électrique alternatif.

21. Installation pour la mise en oeuvre du procédé selon la revendication 1, comportant :
   - un système de compresseur (K) pour comprimer du gaz contenant $O_2$,
   - au moins une chambre de combustion (B,B1,B2) pour la combustion au moins partielle d'un gaz contenant $H_2$,
   - un système de turbine à gaz comportant au moins une turbine à gaz (KT,T), qui délivre de l'énergie mécanique utilisable à l'extérieur de l'installation et l'énergie d'entraînement pour le système de compresseur (K),
   - un système de conduits (5,6), à travers lequel le gaz comprimé contenant $O_2$ peut être amené, directement et/ou indirectement après avoir traversé au moins une des chambres de combustion (B,B1,B2), sous forme de gaz de combustion chaud, à la ou aux turbines à gaz (KT,T),
   - au moins un réacteur pour une réaction endothermique (R,R1,R2) pour engendrer un gaz riche en $H_2$, qui peut être chauffé indirectement par le gaz d'échappement chaud d'une turbine à gaz (KT,T), de plus
   - un système de conduits (14,14a,14b), à travers lequel le gaz riche en $H_2$ peut être amené à l'espace anodique d'un système de piles à combustible (FC), et
   - un système de conduits (15,15a,15b,15c), à travers lequel le gaz contenant un résidu de $H_2$ peut être amené de la sortie de l'espace anodique à la ou aux chambres de combustion (B,B1,B2),
caractérisée en ce que :
   - un échangeur thermique (W) est prévu pour réchauffer indirectement le gaz comprimé contenant $O_2$,
   - un système de conduits (10,10a,10b,10c,10d) est prévu, à travers lequel le gaz d'échappement des turbines peut être amené, directement ou après transfert de chaleur dans au moins un réacteur (R,R1,R2), à l'échangeur thermique (W) pour réchauffer le gaz comprimé contenant $O_2$, et
   - un système de conduits (10d ou 11+11a) est prévu, à travers lequel le gaz d'échappement des turbines peut être amené, sous forme de gaz contenant $O_2$, à l'espace cathodique du système de piles à combustible (FC).

22. Installation selon la revendication 21,
caractérisée en ce que le système de conduits (10d) mène le gaz d'échappement des turbines d'au moins un réacteur (R) à l'espace cathodique du système de piles à combustible (FC).

23. Installation selon la revendication 21,
caractérisée en ce qu'un système de conduits (11,11a) mène le gaz d'échappement des turbines de l'échangeur thermique (W) à l'espace cathodique du système de piles à combustible (FC).

24. Installation selon une des revendications 21 à 23,
caractérisée en ce que le système de compresseur (K) est constitué d'au moins deux étages de compresseur (K1,K2) et, entre les étages de compresseur (K1,K2), il est monté un refroidisseur intermédiaire.

25. Installation selon une des revendications 21 à 24,
caractérisée en ce qu'aussi bien une turbine à gaz séparée (KT) pour l'entraînement du système de compresseur (K) qu'au moins une turbine à gaz séparée de celle-ci (T) pour engendrer l'énergie mécanique pouvant être fournie vers l'extérieur sont prévues.

**26.** Installation selon une des revendications 21 à 24,
caractérisée en ce qu'une turbine à gaz unique (T) pour l'entraînement du système de compresseur (K) et la création de l'énergie mécanique pouvant être fournie vers l'extérieur est prévue.

**27.** Installation selon la revendication 25,
caractérisée en ce que le gaz comprimé contenant $O_2$ peut être amené par un conduit (5) directement de l'échangeur thermique (W) vers la turbine d'entraînement du compresseur (KT).

**28.** Installation selon une des revendications 21 à 26,
caractérisée en ce que, directement devant chaque turbine à gaz (KT,T), il est agencé, à chaque fois, une chambre de combustion (B1,B2).

**29.** Installation selon une des revendications 21 à 28,
caractérisée en ce que les turbines à gaz (KT,T) sont montées en série relativement au trajet du gaz de combustion.

**30.** Installation selon une des revendication 21 à 29,
caractérisée en ce qu'au moins un réacteur de transfert $CO/H_2$ (S) est monté dans le système de conduits (14,14b) pour amenée du gaz riche en $H_2$ à l'espace anodique du système de piles à combustible (FC).

**31.** Installation selon une des revendications 21 à 30,
caractérisée en ce qu'au moins une installation de purification du gaz (P) est montée dans le système de conduits (14,14b) pour l'amenée du gaz riche en $H_2$ à l'espace anodique du système de piles à combustible (FC).

**32.** Installation selon une des revendications 21 à 31,
caractérisée en ce que la turbine à gaz (T) est couplée à un générateur électrique (G) pour engendrer l'énergie mécanique pouvant être fournie vers l'extérieur.

**33.** Installation selon une des revendications 21 à 32,
caractérisée en ce que le système de piles à combustible (FC) est couplé à un onduleur pour engendrer le courant électrique alternatif.

**34.** Installation selon la revendication 32,
caractérisée en ce que le système de piles à combustible (FC) est électriquement couplé au générateur (G).

**35.** Installation selon une des revendications 21 à 34,
caractérisée en ce que, dans le système de conduits (12,12a,15) à travers lequel le gaz d'échappement anodique ou cathodique est guidé avec l'eau formée dans le système de piles à combustible (FC), il est monté un dispositif de séparation (MD,MD$_2$), grâce auquel l'eau formée peut être séparée du gaz d'échappement sous forme de vapeur.

**36.** Installation selon une des revendication 21 à 35,
caractérisée en ce que, dans le conduit (11,12) guidant le gaz de combustion, un dispositif de séparation (MD$_1$) est monté pour séparer l'eau contenue dans le gaz de combustion sous forme de vapeur.

**37.** Installation selon une des revendications 21 à 36,
caractérisée en ce qu'au moins un générateur de vapeur (D$_1$,D$_2$) est monté dans le système de conduits (11,11a,12,12a,12c) guidant le gaz de combustion.

**38.** Installation selon une des revendications 35 à 37,
caractérisée en ce qu'au moins un système de turbine à vapeur (TD) est prévu, dans lequel au moins une partie de la vapeur d'eau peut être détendue pour engendrer de l'énergie mécanique.

**39.** Installation selon la revendication 38,
caractérisée en ce que le système de turbine à vapeur (TD) est mécaniquement couplé à un générateur électrique (GD,G).

**40.** Installation selon une des revendications 21 à 39,
caractérisée en ce que l'espace cathodique du système de piles à combustible (FC) est relié à un conduit d'amenée d'air frais (18), dans lequel au moins un préchauffeur d'air (LW,LW$_1$,LW$_2$), pouvant être chauffé par le gaz de combustion, est monté.

**41.** Installation selon une des revendication 38 à 40,
caractérisée en ce qu'un condenseur (C) pouvant fonctionner en dépression est raccordé au système de turbine à vapeur (TD).

**42.** Installation selon une des revendications 21 à 41,
caractérisée en ce que le ou les réacteurs pour la réaction endothermique (R,R$_1$,R$_2$) sont réalisés sous forme de reformeurs à la vapeur.

**43.** Installation selon une des revendications 21 à 42,
caractérisée en ce qu'au moins un échangeur thermique (W$_1$) est prévu, grâce auquel la chaleur peut être transmise indirectement du gaz riche en H$_2$ engendré dans au moins un réacteur (R,R$_1$,R$_2$) au gaz contenant H$_2$ devant être amené à au moins une chambre de combustion (B,B$_1$,B$_2$).

**44.** Installation selon une des revendications 21 à 43,
caractérisée en ce que le système de piles à combustible (FC) est réalisé sous forme de système de piles à combustible à basse température, en particulier sous forme de système de piles à combustible avec des électrolytes sur la base d'acide phosphorique (PAFC), d'alcali (AFC) ou de polymère solide (SP(E)FC).

**Fig.1**

**Fig.2**

Fig.3

Fig.4

EP 0 553 125 B1

Fig.5